# EUROPÄISCHE PATENTSCHRIFT

(11) **EP 3 175 536 B1**
(45) Veröffentlichungstag und Bekanntmachung des Hinweises auf die Patenterteilung: **03.08.2022**
(21) Anmeldenummer: 15747786.0
(22) Anmeldetag: 03.08.2015
(51) Int. Cl.: H02K 3/40, H01B 3/04, H01B 3/10, H01B 3/12, H01B 3/00

(54) **GLIMMSCHUTZSYSTEM UND ELEKTRISCHE MASCHINE**
CORONA SHIELDING SYSTEM AND ELECTRICAL MACHINE
SYSTÈME ANTI-EFFLUVES ET MACHINE ÉLECTRIQUE

(30) Priorität: 25.09.2014 DE 102014219441
(43) Veröffentlichungstag der Anmeldung: 07.06.2017
(73) Patentinhaber: Siemens Aktiengesellschaft, 80333 München (DE)
(72) Erfinder: KLAUSSNER, Bernhard, 90408 Nürnberg (DE); LANG, Jiri, 90461 Nürnberg (DE); LANG, Steffen, 91352 Hallerndorf (DE); LITINSKY, Alexander, 40233 Düsseldorf (DE); SCHMIDT, Guido, 42799 Leichlingen (DE); SCHULZ-DROST, Christian, 90427 Nürnberg-Neunhof (DE); SCHÄFER, Klaus, 90455 Nürnberg (DE); STAUBACH, Christian, 45768 Marl (DE)
(86) Internationale Anmeldenummer: PCT/EP2015/067791
(87) Internationale Veröffentlichungsnummer: WO 2016/045846

(56) Entgegenhaltungen:
- DE-A1-102009 039 457
- DE-A1-102010 052 889
- DE-A1-102011 083 214
- DE-A1-102011 083 228
- DE-A1-102012 208 226

## Beschreibung

Die Erfindung betrifft ein Glimmschutzsystem, insbesondere für eine elektrische Maschine, vorzugsweise eine Hochspannungsmaschine, wie einen Generator zur Erzeugung von elektrischer Energie, einen elektrischen Motor oder ein sonstiges elektrisches Betriebsmittel mit einer höheren Bemessungsspannung, insbesondere einen Trafo oder eine Durchführung oder ein Kabel.

Es werden immer leistungsstärkere Maschinen, wie beispielsweise Generatoren, entwickelt, da die fortschreitende Technik immer höhere Leistungsdichten verlangt. Ein leistungsstarker Generator, wie beispielsweise ein Turbogenerator, weist insbesondere einen Ständer (Stator) mit einem (Ständer-)Blechpaket und einer Mehrzahl an Generatornuten, in denen sich die Generatorwicklung befindet, auf.

Die Hauptisolierung dieser Generatorwicklung gegen das Blechpaket ist ein elektrisch hoch beanspruchtes System. Im Betrieb entstehen hohe Spannungen, welche in dem Isoliervolumen zwischen dem auf Hochspannung befindlichen Leiterstab und dem auf Erdpotential liegenden Blechpaket abgebaut werden müssen. An den Kanten der Bleche im Blechpaket entstehen dabei Feldüberhöhungen, die ihrerseits Teilentladungen hervorrufen. Diese Teilentladungen führen bei Auftreffen auf das Isolationssystem lokal zu sehr starken Erhitzungen. Dabei werden die organischen Materialien des Isoliersystems inklusive dieses Außenglimmschutzes sukzessive in niedermolekulare, volatile Produkte, beispielsweise in Kohlendioxid, zersetzt.

Ein wichtiger Bestandteil des Isolationssystems ist ein sogenannter Außenglimmschutz (AGS). Er wird bei größeren Generatoren und Elektromotoren direkt auf die Oberfläche der Generatorwicklungsisolation aufgebracht. Der Außenglimmschutz besteht gegenwärtig häufig aus Ruß und Graphit enthaltenden Bändern oder Lacken. Systembedingt kann bei einem solchen Isolationssystem vor allem die Grenzfläche zwischen Außenglimmschutz und Hauptisolation nicht vollständig porenfrei hergestellt werden. Daher kommt es bei hinreichend hohen elektrischen Feldstärken im Isolationssystem zu einer entsprechend hohen elektrischen Teilentladungsaktivität, die den Außenglimmschutz im Betrieb im Laufe der Zeit komplett verbrennt. Dies führt somit zu einer vorzeitigen Alterung der Isolierung und im schlimmsten Fall zu einem Erdschluss der elektrischen Maschine. Dies bedeutet regelmäßig einen irrepa\rablen Komplettausfall der Maschine.

Der Außenglimmschutz muss einen gewissen Quadratwiderstand aufweisen, welcher in einem bestimmten Bereich liegt. Ist er zu gering, so können die Blechpakete elektrisch kurzgeschlossen werden, was zu hohen induzierten Kreisströmen führen kann, welche sich über die Enden des Blechpaketes und den Außenglimmschutz schließen und zu stromstarken Lichtbögen führen. Bei zu hohem Widerstand hingegen kann es zu Hochspannungsfunkenerosion kommen. Idealerweise wäre der Widerstand im Außenglimmschutzsystem einstellbar, so dass eine Anisotropie herstellbar wäre, die erhöhte Leitfähigkeit in radialer Richtung, also vom stromführenden Leiter zum Blechpaket hin, und einen erhöhten Widerstand, also geringe Leitfähigkeit, in Stabrichtung zeigt. Ein solcher Außenglimmschutz ist beispielsweise aus DE 202011083214 A1, DE 102010052889 A1, DE 102012208226 A1, DE 102011083228 A1 oder DE 102009039457 A1 bekannt.

Häufig wird in Glimmschutzsystemen als gegenüber Teilentladungen beständiges Material Glimmer herangezogen. Typischerweise wird Glimmer in Isoliersystemen als Isolierband auf der Basis von Feinglimmerpapier mit Trägermaterialien wie insbesondere Folien, Gewebe, Vliese sowie den notwenigen Harzen zur Verklebung des Papiers mit den Trägermaterialien sowie zur mechanischen Stabilisierung des Glimmerpapiers ("Verschlussharz") eingesetzt.

Kritisch für die Lebensdauer der Isoliersysteme und damit der elektrischen Maschine ist eine Beständigkeit des Isolationssystems gegen Delaminierung. Bei einer Delaminierung entstehen Fehlstellen, welche zur erhöhten Teilentladungsaktivität und zu einem Versagen des Isolationssystems und somit der elektrischen Maschine führen.

Es ist daher Aufgabe der Erfindung, die Nachteile des Standes der Technik zu überwinden und ein beständiges Glimmschutzsystem zur Verfügung zu stellen. Ferner ist es Aufgabe der Erfindung, eine verbesserte elektrische Maschine, insbesondere eine Hochspannungsmaschine, zu schaffen, welche insbesondere eine hohe Lebensdauer aufweist.

Diese Aufgabe der Erfindung wird mit einem Glimmschutzband mit den in Anspruch 1 angegebenen Merkmalen gelöst. Bevorzugte Weiterbildungen der Erfindung ergeben sich aus den zugehörigen Unteransprüchen sowie der nachfolgenden Beschreibung.

Das erfindungsgemäße Glimmschutzband ist ein Glimmschutzband insbesondere für eine elektrische Maschine, vorzugsweise eine Hochspannungsmaschine, insbesondere einen Generator zur Erzeugung von elektrischer Energie, einen elektrischen Motor oder ein sonstiges elektrisches Betriebsmittel, zweckmäßigerweise einen Trafo oder eine Durchführung oder ein Kabel. Das erfindungsgemäße Glimmschutzband umfasst ein Glimmschutzpapier, einen Füllstoff in einer polymeren Matrix, wobei der Füllstoff Partikel aufweist, welche mit Glimmer gebildet sind und welche den Glimmer umgebend eine mit mindestens einem keramischen Metalloxid gebildete Schicht aufweisen.

Gerade Glimmerpartikel bilden einen mechanischen Schwachpunkt eines solchen Glimmschutzsystems, denn Glimmerpartikel weisen eine leichte Spaltbarkeit auf. Auf diese Weise bilden Glimmerpartikel eine typische Ursache für Delaminierungen von Glimmschutzsystemen, welche Fehlstellen verursachen, die zur erhöhten Teilentladungsaktivität und zu einem Versagen der Isolation führen. Erfindungsgemäß wird eine erhöhte Beständigkeit des Glimmschutzsystems erreicht, indem die Spaltbarkeit der Glimmerpartikel und somit das Delaminieren des Glimmschutzsystems infolge der mit keramischem Metalloxid gebildeten Schicht deutlich herabgesetzt wird. Die Beschichtung gewährleistet einen stabilen mechanischen Verbund der einzelnen Glimmerlagen im Partikel und verhindert somit wirksam eine Spaltung an diesen durch die Kristallebenen bedingten Glimmerlagen.

Geeigneterweise weisen die Partikel Abmessungen von, zumindest im (insbesondere arithmetischen) Mittel, höchstens einem Millimeter und vorzugsweise von, zumindest im (insbesondere arithmetischen) Mittel, höchstens 100 Mikrometern auf.

In einer bevorzugten Weiterbildung des erfindungsgemäßen Glimmschutzsystems umgibt die Schicht den Glimmer eines Partikels vollumfänglich, insbesondere allseits. Diese Weiterbildung der Erfindung ermöglicht eine besonders zuverlässige Vermeidung von Fehlstellen.

Zweckmäßigerweise ist bei dem erfindungsgemäßen Glimmschutzsystem die Schicht mit Aluminiumoxid (Al₂O₃) und/oder Siliziumdioxid (SiO₂) und/oder Titandioxid (TiO₂) gebildet. Die vorgenannten keramischen Metalloxide sind elektrisch nicht leitfähig und ermöglichen eine geeignete mechanische Stabilisierung.

Gemäß der Erfindung bildet das Glimmschutzsystem ein Glimmschutzpapier. Die Herstellung von Glimmerpapier mit Glimmerpartikeln ist an sich bekannt und kann auf gleiche Art auch mit erfindungsgemäß vorgesehenen Glimmerpartikeln, welche die mit mindestens einem keramischen Metalloxid gebildete Schicht aufweisen, angewandt werden.

Zweckmäßigerweise weist das erfindungsgemäße Glimmschutzsystem zudem ein Trägermaterial auf, mit welchem das Glimmschutzpapier verklebt ist. Vorzugsweise umfasst das Trägermaterial eine Folie und/oder ein Gewebe und/oder ein Vlies.

In einer vorteilhaften Weiterbildung des erfindungsgemäßen Glimmschutzsystems bildet dieses zumindest ein Glimmschutzband. Insbesondere wird das Glimmerpapier wie zuvor beschrieben mit organischen Fasern, vorzugsweise Aramid und/oder PET (Polyethylenterephthalat) versetzt und vorzugsweise verfestigt. Auf diese Weise ist das Glimmerband trägerlos verwirklicht.

Geeigneterweise bildet das erfindungsgemäße Glimmschutzsystem zumindest einen Teil eines Außenglimmschutzes und/oder zumindest einen Teil eines Endenglimmschutzes.

Die erfindungsgemäße elektrische Maschine ist insbesondere eine Hochspannungsmaschine und weist ein Glimmschutzsystem wie zuvor beschrieben auf. Bevorzugt ist die erfindungsgemäße elektrische Maschine ein Generator zur Erzeugung von elektrischer Energie, ein elektrischer Motor oder ein sonstiges elektrisches Betriebsmittel mit einer höheren Bemessungsspannung, insbesondere ein Trafo oder eine Durchführung oder ein Kabel.

## Patentansprüche

1. Glimmschutzband, insbesondere für eine elektrische Maschine, umfassend ein Glimmschutzpapier, zumindest einen Füllstoff in einer polymeren Matrix aufweisend, wobei der Füllstoff Partikel hat, welche mit Glimmer gebildet sind und welche den Glimmer umgebend eine mit mindestens einem Metalloxid Gebildete Schicht aufweisen, **dadurch gekennzeichnet, dass** die Schicht mit einem keramischen Metalloxid gebildet ist.

2. Glimmschutzband nach Anspruch 1, wobei die Glimmer-Partikel vollumfänglich mit keramischem Metalloxid beschichtet sind.

3. Glimmschutzband nach einem der Ansprüche 1 oder 2, wobei die Glimmer-Partikel mit Aluminiumoxid beschichtet sind.

4. Glimmschutzband nach einem der vorhergehenden Ansprüche, wobei die Glimmer-Partikel mit Siliziumoxid beschichtet sind.

5. Glimmschutzband nach einem der vorhergehenden Ansprüche, wobei die Glimmer-Partikel mit Titandioxid beschichtet sind.

6. Glimmschutzband nach einem der vorhergehenden Ansprüche, das trägerlos realisiert ist.

7. Glimmschutzband nach einem der vorhergehenden Ansprüche 1-5, das einen Träger aufweist, mit welchem das Glimmschutzpapier verklebt ist.

8. Glimmschutzband nach Anspruch 7, wobei der Träger zumindest zum Teil eine Folie umfasst.

9. Glimmschutzband nach einem der vorhergehenden Ansprüche 7 bis 8, wobei der Träger zumindest zum Teil ein Gewebe umfasst.

10. Glimmschutzband nach einem der vorhergehenden Ansprüche 7 bis 9, wobei der Träger zumindest zum Teil ein Vlies umfasst.

11. Glimmschutzband nach einem der vorhergehenden Ansprüche 7-10, wobei der Träger zumindest zum Teil organische Fasern umfasst.

12. Glimmschutzband nach einem der vorhergehenden Ansprüche 1-11, wobei der Träger zumindest zum Teil Aramidfasern umfasst.

13. Glimmschutzband nach einem der vorhergehenden Ansprüche 7-12, wobei der Träger zumindest zum Teil PET-Fasern umfasst.

14. Glimmschutzband nach einem der vorhergehenden Ansprüche, welches zumindest einen Teil eines Außenglimmschutzes und/oder zumindest einen Teil eines Endenglimmschutzes bildet oder aufweist.

15. Elektrische Maschine, insbesondere Hochspannungsmaschine, welche ein Glimmschutzband nach einem der vorhergehenden Ansprüche aufweist.

## Claims

1. Corona shielding tape, especially for an electrical machine, comprising a corona shielding paper including at least one filler in a polymeric matrix, wherein the filler has particles which are formed with mica and which have, surrounding the mica, a layer formed by at least one metal oxide, **characterized in that** the layer is formed by a ceramic metal oxide.

2. Corona shielding tape according to Claim 1, wherein the mica particles are fully coated with ceramic metal oxide.

3. Corona shielding tape according to either of Claims 1 and 2, wherein the mica particles are coated with aluminium oxide.

4. Corona shielding tape according to any of the preceding claims, wherein the mica particles are coated with silicon oxide.

5. Corona shielding tape according to any of the preceding claims, wherein the mica particles are coated with titanium dioxide.

6. Corona shielding tape according to any of the preceding claims, in carrier-free form.

7. Corona shielding tape according to any of the preceding Claims 1-5, including a carrier to which the corona shielding paper is bonded.

8. Corona shielding tape according to Claim 7, wherein the carrier at least partly comprises a film.

9. Corona shielding tape according to either of the preceding Claims 7 and 8, wherein the carrier at least partly comprises a woven fabric.

10. Corona shielding tape according to any of the preceding Claims 7 to 9, wherein the carrier at least partly comprises a nonwoven fabric.

11. Corona shielding tape according to any of the preceding Claims 7 to 10, wherein the carrier at least partly comprises organic fibres.

12. Corona shielding tape according to any of the preceding Claims 1-11, wherein the carrier at least partly comprises aramid fibres.

13. Corona shielding tape according to any of the preceding Claims 7-12, wherein the carrier at least partly comprises PET fibres.

14. Corona shielding tape according to any of the preceding claims, which forms or includes at least part of an outer corona shield and/or at least part of an end corona shield.

15. Electrical machine, especially high-voltage machine, including a corona shielding tape according to any of the preceding claims.

## Revendications

1. Bande de protection anti-effluves, plus particulièrement pour une machine électrique, comprenant un papier de protection anti-effluves, présentant au moins une matière de remplissage dans une matrice polymère, dans laquelle la matière de remplissage a des particules qui sont formées avec du mica et qui présentent, entourant le mica, une couche formée avec au moins un oxyde métallique, **caractérisé en ce que** la couche est formée avec un oxyde métallique céramique.

2. Bande de protection anti-effluves selon la revendication 1, dans laquelle les particules de mica sont revêtues d'oxyde métallique céramique sur toute leur circonférence.

3. Bande de protection anti-effluves selon l'une des revendications 1 ou 2, dans laquelle les particules de mica sont revêtues d'oxyde d'aluminium.

4. Bande de protection anti-effluves selon l'une des revendications précédentes, dans laquelle les particules de mica sont revêtues d'oxyde de silicium.

5. Bande de protection anti-effluves selon l'une des revendications précédentes, dans laquelle les particules de mica sont revêtues de dioxyde de titane.

6. Bande de protection anti-effluves selon l'une des revendications précédentes, qui est réalisée sans support.

7. Bande de protection anti-effluves selon l'une des revendications précédentes 1 à 5, qui présente un support auquel est collé le papier de protection anti-effluves.

8. Bande de protection anti-effluves selon la revendication 7, dans laquelle le support comprend, au moins en partie, une feuille.

9. Bande de protection anti-effluves selon l'une des revendications précédentes 7 à 8, dans laquelle le support comprend, au moins en partie, un tissu.

10. Bande de protection anti-effluves selon l'une des revendications précédentes 7 à 9, dans laquelle le support comprend, au moins en partie, un non-tissé.

11. Bande de protection anti-effluves selon l'une des revendications précédentes 7 à 10, dans laquelle le support comprend, au moins en partie, des fibres organiques.

12. Bande de protection anti-effluves selon l'une des revendications précédentes 1 à 11, dans laquelle le support comprend, au moins en partie, des fibres d'aramide.

13. Bande de protection anti-effluves selon l'une des revendications précédentes 7 à 12, dans laquelle le support comprend, au moins en partie, des fibres en PET.

14. Bande de protection anti-effluves selon l'une des revendications précédentes, qui forme ou présente au moins une partie d'une protection anti-effluves externe et / ou au moins une partie d'une protection anti-effluves d'extrémités.

15. Machine électrique, plus particulièrement machine haute-tension, qui présente une bande de protection anti-effluves selon l'une des revendications précédentes.
